# EUROPEAN PATENT SPECIFICATION

(11) **EP 4 361 797 B1**
(45) Date of publication and mention of the grant of the patent: **11.03.2026**
(21) Application number: 22214195.4
(22) Date of filing: 16.12.2022
(51) Int. Cl.: G06F 8/61, G06F 9/50, H04L 67/1031, H04L 67/568, H04L 67/5682, G06F 9/455, H04L 67/10, H04L 67/00

(54) **INTELLIGENT PRELOADING OF VMS FOR CONTAINER ORCHESTRATION PLATFORMS**
INTELLIGENTES VORLADEN VON VMS FÜR CONTAINERORCHESTRIERUNGSPLATTFORMEN
PRÉCHARGEMENT INTELLIGENT DE VMS POUR DES PLATEFORMES D'ORCHESTRATION DE CONTENEURS

(30) Priority: 26.10.2022 US 202217974154
(43) Date of publication of application: 01.05.2024
(73) Proprietor: Red Hat, LLC, Raleigh, NC 27601 (US)
(72) Inventor: GALLAGHER, Brian, Raleigh (US); O'CONNOR, Cathal, Raleigh (US)
(74) Representative: Murgitroyd & Company

(56) References cited:
- US-A1- 2017 180 346
- US-A1- 2018 246 741

## Description

### TECHNICAL FIELD

Aspects of the present disclosure relate to cloud computing systems, and more particularly, to provisioning resources in a cloud environment.

### BACKGROUND

A container orchestration platform is a platform for developing and running containerized applications and may allow applications and the data centers that support them to expand from just a few machines and applications to thousands of machines that serve millions of clients. Container orchestration engines may provide an image-based deployment module for creating containers and may store one or more image files for creating container instances. Many application instances can be running in containers on a single host without visibility into each other's processes, files, network, and so on. Each container may provide a single function (often called a "service") or component of an application, such as a web server or a database, though containers can be used for arbitrary workloads. One example of a container orchestration platform is the Red Hat^{™} OpenShift^{™} platform built around Kubernetes.

US Patent Application No. 2017/180346 A1 discloses a method comprising receiving a request to store a software image, the request including a set of layers of the image. As a result of successful authentication of the request, a subset of layers of the image that have not previously been stored are determined, and the software image is launched in a container. One embodiment of the invention describes caching of previously-used or updated container images. US 2018/246741 A1 discloses a cluster optimization method.

### SUMMARY OF THE DISCLOSURE

According to a first aspect of the present disclosure there is provided a method comprising: scanning one or more worker nodes of a container cluster to generate an image set describing container images loaded onto the one or more worker nodes of a client application, wherein scanning the one or more worker nodes comprises adding to the image set the container images that are associated with currently running containers or adding to the image set the container images that are associated with containers that have run within a threshold time frame;
analyzing using a set of analysis rules, by a processing device, the image set to generate an image manifest comprising at least some of the container images in the image set, wherein the set of analysis rules comprise a criteria used to filter the image set to comprise container images determined to be likely to be used by a new worker node;
generating a snapshot from the image manifest, wherein the snapshot describes a set of container images to be used to build a new worker node;
storing the snapshot in a local memory of the container cluster; and
responsive to an instruction to provision the new worker node, loading the set of container images from the local memory to the new worker node and building a container for each of the container images in the set,
wherein generating the snapshot comprises determining a degree of similarity between the image manifest and a previously implemented manifest, and triggering the generation of the snapshot responsive to a determination that the degree of similarity is below a threshold.

Analyzing the image set to generate the image manifest may comprise identifying a set of container images that represent a union of the one or more worker nodes. Analyzing the image set to generate the image manifest may comprise identifying a set of container images that represent an intersection of the one or more worker nodes. Generating the snapshot comprises determining a degree of similarity between the image manifest and a previously implemented manifest and triggering the generation of the snapshot responsive to a determination that the degree of similarity is below a threshold. The method may comprise storing the image manifest as a historical manifest and associating the historical manifest and the snapshot with a snapshot identifier. The method may comprise generating an additional image manifest, determining a degree of similarity between the additional image manifest and the historical manifest and, responsive to a determination that the degree of similarity is below a threshold, sending the snapshot identifier to the container cluster. Scanning the one or more worker nodes comprises adding to the image set the container images that are associated with currently running containers or scanning the one or more worker nodes comprises adding to the image set the container images that are associated with containers that have run within a threshold time frame. analyzing the image set to generate the image manifest comprises identifying a set of container images that represent a union of the one or more worker nodes or analyzing the image set to generate the image manifest comprises identifying a set of container images that represent an intersection of the one or more worker nodes.

According to a second aspect of the present disclosure there is provided a computing system comprising:
a memory; and
a processing device operatively coupled to the memory, the processing device to:
   scan one or more worker nodes of a container cluster to generate an image set describing container images loaded onto the one or more worker nodes of a client application, wherein to scan the one or more worker nodes the processing device is to add to the image set the container images that are associated with currently running containers or to add to the image set the container images that are associated with containers that have run within a threshold time frame;
   analyze the image set using a set of analysis rules to generate an image manifest comprising at least some of the container images in the image set, wherein the set of analysis rules comprise a criteria used to filter the image set to comprise container images determined to be likely to be used by a new worker node;
   generate a snapshot from the image manifest, wherein the snapshot describes a set of container images to be used to build a new worker node;
   store the snapshot in a local memory of the container cluster; and
   responsive to an instruction to provision the new worker node, load the set of container images from the local memory to the new worker node and build a container for each of the container images in the set of container images,
   wherein generating the snapshot comprises determining a degree of similarity between the image manifest and a previously implemented manifest, and triggering the generation of the snapshot responsive to a determination that the degree of similarity is below a threshold.

The computing system wherein to analyze the image set to generate the image manifest the processing device may be to identify a set of container images that represent a union of the worker nodes. The computing system wherein to analyze the image set to generate the image manifest the processing device may be to identify a set of container images that represent an intersection of the worker nodes. The computing system wherein to generate the snapshot the processing device is to determine a degree of similarity between the image manifest and a previously implemented manifest and trigger the generation of the snapshot responsive to a determination that the degree of similarity is below a threshold. The computing system wherein to generate the snapshot the processing device may be to combine the image manifest and a base image. To scan the one or more worker nodes the processing device may be to add to the image set the container images that are associated with currently running containers or to scan the one or more worker nodes the processing device may be to add to the image set the container images that are associated with containers that have run within a threshold time frame. To analyze the image set to generate the image manifest the processing device may be to identify a set of container images that represent a union of the worker nodes or to analyze the image set to generate the image manifest the processing device may be to identify a set of container images that represent an intersection of the worker nodes. To generate the snapshot the processing device may be to determine a degree of similarity between the image manifest and a previously implemented manifest and trigger the generation of the snapshot responsive to a determination that the degree of similarity is below a threshold or to generate the snapshot the processing device may be to combine the image manifest and a base image

According to a third aspect of the present disclosure there is provided a non-transitory computer-readable storage medium including instructions that, when executed by a processing device, cause the processing device to:
scan one or more worker nodes of a container cluster to generate an image set describing container images loaded onto the one or more worker nodes of a client application, wherein to scan the one or more worker nodes comprises to add to the image set the container images that are associated with currently running containers or to add to the image set the container images that are associated with containers that have run within a threshold time frame;
analyze, by the processing device, using a set of analysis rules, the image set to generate an image manifest comprising at least some of the container images in the image set; generate a snapshot from the image manifest, wherein the snapshot describes a set of container images to be used to build a new worker node, wherein the set of analysis rules comprise a criteria used to filter the image set to comprise container images determined to be likely to be used by a new worker node;
store the snapshot in a local memory of the container cluster; and
responsive to an instruction to provision the new worker node, load the set of container images from the local memory to the new worker node and build a container for each of the container images in the set of container images,
wherein generating the snapshot comprises determining a degree of similarity between the image manifest and a previously implemented manifest, and triggering the generation of the snapshot responsive to a determination that the degree of similarity is below a threshold.

To analyze the image set to generate the image manifest may comprise to identify a set of container images that represent a union of the worker nodes. To analyze the image set to generate the image manifest may comprise to identify a set of container images that represent an intersection of the worker nodes. To scan the one or more worker nodes comprises to add to the image set the container images that are associated with currently running containers or to scan the one or more worker nodes comprises to add to the image set the container images that are associated with containers that have run within a threshold time frame. To analyze the image set to generate the image manifest may comprise to identify a set of container images that represent a union of the worker nodes or to analyze the image set to generate the image manifest may comprise to identify a set of container images that represent an intersection of the worker nodes.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art.
Fig. 1 is a block diagram that illustrates an example computer system architecture, in accordance with some embodiments of the present disclosure.
Fig. 2 is a block diagram that illustrates an example system for generating snapshots, in accordance with some embodiments of the present disclosure.
Fig. 3 is a block diagram that illustrates example system for using snapshots, in accordance with some embodiments of the present disclosure.
Fig. 4 is a process flow diagram for a method of generating container image snapshots, in accordance with some embodiments of the present disclosure.
Fig. 5 is a block diagram of a system for generating container image snapshots, in accordance with some embodiments of the present disclosure.
Fig. 6 is a process flow diagram summarizing a method of identifying a container image snapshot to be used to generate new worker nodes, in accordance with some embodiments of the present disclosure.
Fig. 7 is a block diagram of a system for identifying a container image snapshot to be used to generate new worker nodes, in accordance with some embodiments of the present disclosure.
Fig. 8 is a block diagram of an example computing device 800 that may perform one or more of the operations described herein, in accordance with some embodiments of the present disclosure.

### DETAILED DESCRIPTION

The present disclosure describes techniques for provisioning resources in a cloud computing system, including container orchestration platforms such as OpenShift^{™} and Kubernetes.

A cloud computing system may provide a serverless framework for the performance of client applications. For example, the serverless framework may execute functions of a client's web application. The serverless framework may invoke one or more serverless resources to execute the functions for the client on one or more worker nodes of a computing cluster. The worker nodes may be physical computing systems or may be execution environments within a such as virtual machines (VMs) and containers.

In a serverless system, the cloud computing system may dynamically manage the allocation and provisioning of serverless resources within a computing framework referred to herein as a container cluster. The container cluster may be managed by a host system referred to herein as a container-orchestration system. If the workload being processed by the client application exceeds a specified capacity level, the serverless system may scale the amount of serverless resources available to handle the computing overhead. In some cases, increasing the amount of serverless resources may involve instantiating a new container within a new worker node configured to host the container.

Each container provides an isolated execution environment for processing tasks related to the client applications. To instantiate a new container, the container orchestration system uploads a container image that provides instructions for how to build the container. The container image describes the allocated computing resources and file systems for a container instance to be instantiated, such as the container's operating system, applications to be executed, processing tasks to be handled, etc. The container image may include various base files that are required for minimal functioning as well as client-specific files that are specific to the client's applications and processes.

A container image repository may store several different container images that may be retrieved and instantiated in a host of the container cluster. When instantiating a container, a collection of applicable container images can be pulled from the repository and stored locally at the worker node that is supporting the container. In most cases, the pulling of container images happens after the container is scheduled and assigned to the worker node. The number and size of the images in the collection may be relatively large, for example, 500 Megabytes or more depending on the user applications. If the images are stored in a remote repository, the pulling of the images adds a time delay between the time that the container instantiation is requested and the time that the container is able to receive and process requests.

Embodiments of the present disclosure provide techniques to intelligently predict what containers will run on a new worker node based on the existing worker nodes in the cluster. The predicted container images may be stored locally within the container cluster to be used in the event that a new container is requested. This has the benefit of speeding up the "ready" time for a container, i.e. the time at which a container can receive and process requests, by removing the need for the worker node to pull the container images from the remote repository after the new container is scheduled and assigned to the worker node.

In accordance with embodiments of the present techniques, a continuous scanning and analysis of existing worker nodes in a container cluster is performed to determine what a newly provisioned worker node will likely use in terms of container images. A snapshot containing these container images can be created and stored in the cluster. When a new container is provisioned, the container images from the snapshot can be pulled by the worker node from local memory, which avoids the delay involved in pulling images from remote image repositories. In this way, newly provisioned containers can be available for receiving and processing task request much more quickly. This is turn reduces possible downtime of the client application that would otherwise be encountered due to resource constraints while the worker node is provisioning the end user application. When multiple nodes are requested, there is an added benefit of reducing network bandwidth usage, since each node can pull images from the local snapshot. In other words, the container images are pulled once from the remote image repository and stored to the snapshot for use by the new worker nodes, rather than each new worker node separately pulling container images from the remote image repository.

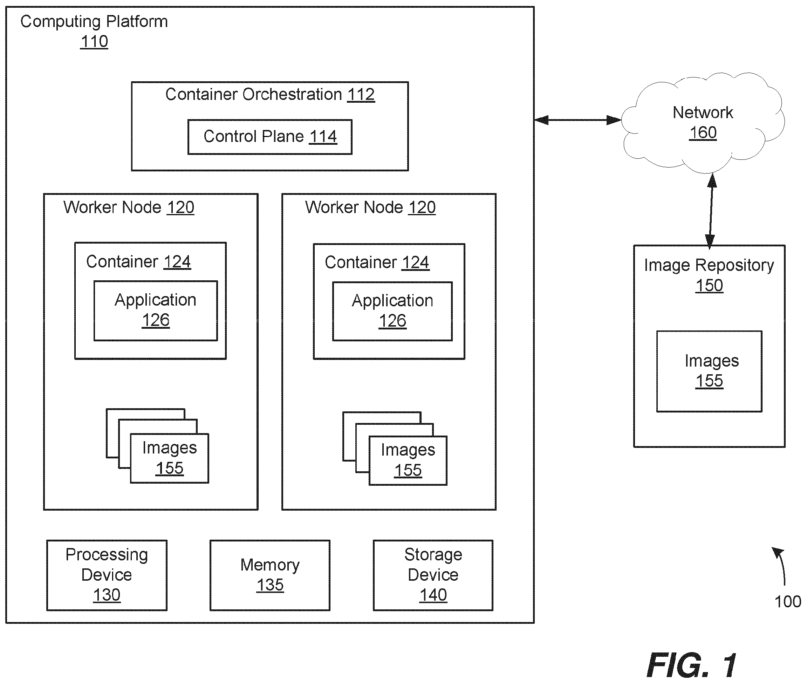

Fig. 1 is a block diagram that illustrates an example computer system architecture, in accordance with some embodiments of the present disclosure. Computer system 100 includes computing cluster 110, which may part of a cloud computing platform, for example. Resources of the computing cluster 110 may be provisioned to clients using platform as a service (PaaS) model. Computing cluster 110 includes container orchestration system 112 to instantiate and manage containers and container workloads across one or more worker nodes 120A and 120B of the computing cluster 110. The worker nodes 120A and 120B may be physical host machines or virtual machines in communication with one another. For example, worker nodes 120A and 120B may each be a physical host machine. Alternatively, worker nodes 120A and 120B may each be a virtual machine executing on a single host machine or multiple host machines. Although FIG. 1 depicts only two worker nodes 120A and 120B, computing cluster 110 may include any number of worker nodes. Additionally, computing cluster 110 may include both physical host machines and virtual machines.

The computing cluster 110 may include a processing device 130, memory 135, and storage device 140. Memory 135 may include volatile memory devices (e.g., random access memory (RAM)), non-volatile memory devices (e.g., flash memory) and/or other types of memory devices. Storage device 140 may be one or more magnetic hard disk drives, a Peripheral Component Interconnect (PCI) solid state drive, a Redundant Array of Independent Disks (RAID) system, a network attached storage (NAS array, etc. Processing device 130 may include multiple processing devices, storage devices, or devices. Processing device 130 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 130 may also include one or more special-purpose processing devices such as an application specific integrated circuit (ASIC), a field programmable gate array (FPGA), a digital signal processor (DSP), network processor, or the like.

Each worker node 120A and 120B may execute one or more applications 126A and 126B. The applications may include any type of executable program, including operating system files, microservices, and components of client applications such as databases, Web servers, and other services and functions. The applications execute within containers that provide an isolated execution environment. In some embodiments, the containers are executed inside of Kubernetes pods (not shown), which provide for grouping of containers so that the containers within a single pod can share the same resources, allowing them to communicate between each other as if they shared the same physical hardware, while remaining isolated to some degree.

The container orchestration system 112 provides management and orchestration functions for deploying and managing applications and services in the system 100. For example, the container orchestration system 112 can build one or more container images for providing functionality of applications and services. The container orchestration system 112 can then create one or more containers to host an application or service, for example, by instructing one or more worker nodes 120 to instantiate one or more containers 124 from the container image(s)). In some embodiments, users with suitable credentials may be able to communicate directly with the container orchestration API to facilitate management of the computing cluster 110.

The container orchestration system 112 can include a control plane 114 that exposes applications to internal and external networks by defining network policies that control communication with containerized applications (e.g., incoming HTTP or HTTPS requests for services inside the cluster). For example, the control plane 114 may include REST APIs which expose objects as well as controllers which read those APIs, apply changes to objects, and report status or write back to objects. The control plane 114 manages workloads on the worker nodes 120 and also executes services that are required to control the worker nodes 120 to facilitate deployment, scaling, and management of containerized software applications. In some embodiments, the control plane 114 may include a Kubernetes API server.

The worker nodes 120 are where the actual workloads requested by users run and are managed. The worker nodes 120 advertise their capacity and a scheduler (not shown), which is part of the control plane 114, determines which worker nodes 120 containers will be started on. Each worker node 120 includes functionality to accept and fulfill requests for running and stopping container workloads, and a service proxy, which manages communication across worker nodes 120. Each container may provide a single function (often called a "micro-service") or component of an application, such as a web server or a database, though containers can be used for arbitrary workloads.

The container orchestration system 112 may scale a service in response to workloads by instantiating additional containers with service instances in response to an increase in the size of a workload being processed by the worker nodes. In this way, the container orchestration system 112 may allow applications and the data centers that support them to expand from just a few machines and applications to thousands of machines that serve millions of clients.

The container orchestration system 112 may provide an image-based deployment module for creating containers. In some embodiments, container orchestration system 112 may pull container images 155 from a remote image repository 150 which is communicatively coupled to the container orchestration system 112 through a network 160. Network 160 may be a public network (e.g., the internet), a private network (e.g., a local area network (LAN) or wide area network (WAN)), or a combination thereof. In one embodiment, network 160 may include a wired or a wireless infrastructure, which may be provided by one or more wireless communications systems, such as a WiFi^{™} hotspot connected with the network 160 and/or a wireless carrier system that can be implemented using various data processing equipment, communication towers (e.g. cell towers), etc. In some embodiments, the network 160 may be an L3 network.

The container images 155 contain the instructions needed to build a container. For example, container images may contain the operating system and other executable programs to be run inside the container, as well as instructions for how to build the container and what applications should be executed when the container is built. The container image can hold the source code, libraries, dependencies, environment configuration, tools, and other files needed for the client's application to run. The container image may include several container image layers and can be formatted in accordance with the Open Container Initiative (OCI) specification.

The container image 155 may include base files and client files. As used herein base files are platform-specific files that are required for the container and/or the worker node VM to operate properly within the computing cluster. Examples of base files include operating system files and environment configuration files that describe system resources to be used by the container, such as a communication services, memory resources, processing resources, and the like. Base files may be defined and generated by a provider of the cloud computing resources. Client files are those files that the client provisions to support the client application and may be defined and created by the client. For example, client files may be specific tasks or workloads that should run on the container.

When a container is to be instantiated one or more container images may be pulled from the remote repository by the container orchestration system 112. The container images to be pulled may be determined by the client. One the container images have been received, the container orchestration system 112 can build the container and prepare it to start receiving tasks. As mentioned above, there may be a significant delay between the time that container is instantiated and the time that the container can begin receiving requests.

Embodiments of the present techniques allow container images to be pulled ahead of time, so that the container images are available in local memory in the event that a new container 124 is requested. As described further below, a client's currently running containers 124 may be monitored to determine what container images 155 are currently being used on the container 124. Based on the monitoring, the relevant container images may be pulled from the image repository 150 and may be stored to a local memory device such as memory 135 or storage device 140. As used herein, the term local memory is any computer memory that can be accessed through a computer bus without going through a communications network such as network 160. The set of container images that are predicted to be used by the new container may be referred to herein as a snapshot. When a new worker node is requested, the worker node is preloaded with the container images contained in the snapshot, reducing the number of container images to be pulled from remote image repository 150 and enabling the new container to be ready sooner.

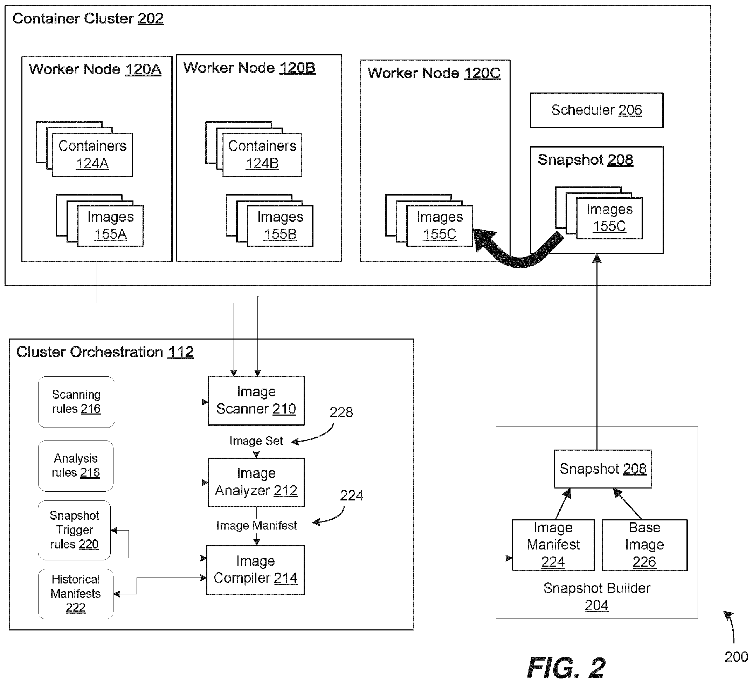

Fig. 2 is a block diagram that illustrates an example system 200 for generating snapshots, in accordance with some embodiments of the present disclosure. The system 200 includes a container cluster 202, the container orchestration system 112, and a snapshot builder 204. The container cluster 202 may be cluster of containers 124A and 124B operating on worker nodes 120A and 120B that have been provisioned to a client and configured to operate together to run a client application. The container cluster 202, the container orchestration system 112, and the snapshot builder 204 are implemented in hardware or a combination of hardware and software. For example, the container cluster 202, the container orchestration system 112, and the snapshot builder 204 may be services operating on the computing cluster 110 of Fig. 1.

In this embodiment, the worker nodes 120A and 120B are implemented as virtual machines and managed by a scheduler 206, which may be implemented as a component of the control plane 114 (Fig. 1). However, in some embodiments, the worker nodes 120 may be separate physical machines. In this embodiment, the scheduler 206 creates and runs the worker nodes 120 and the containers 124 running within the worker nodes 120. In the depicted example, worker node 120A and 120B are currently operational and are processing tasks in accordance with the client's application. Additionally, the containers 124A are associated with container images 155A and containers 124B are associated with container images 155B, which are labeled differently to reflect that the container images 155 may not be the same for each worker node 120. The specific container images 155 loaded onto a worker node 120 may be determined in part by the client and therefore may not be known in advance by the platform provider. Additionally, the cluster orchestration system 112 can start and stop containers in response to various factors such as changes in the workload and to manage availability. Thus, the number and type of containers instantiated on a worker node 120 may be continuously changing.

To determine which container images 155 are likely to be used by newly provisioned worker nodes 120C, the container orchestration system 112 may monitor the containers 124A and 124B and analyze the resulting data. The container orchestration system 112 may then build a snapshot 208 containing the container images 155C to be used for new worker nodes. To perform these processes, the container orchestration system 112 can include an image scanner 210, an image analyzer 212, and an image compiler 214.

The image scanner 210 continuously scans the currently running worker nodes 120 120 to identify the container images 155 loaded onto the worker nodes 120 and generates an image set 228 to be sent to the image analyzer 212. In some embodiments, the scanning may be performed in accordance with a set of scanning rules 216, which may be defined by the system administrator and/or the client. The scanning rules 216 describe criteria that can be used to filter the container images to focus on those container images that are used more frequently. For example, some containers 124 may be in a suspended state and/or may be used infrequently. Accordingly, the scan rules 216 can include criteria specifying that such container images are to be excluded from the image set. One example rule could specify that only currently running containers be included in the image set. Another example rule could specify that only containers that have been run within a threshold time frame be included in the image set. Another example rule could specify that only containers that run with a threshold execution frequency be included in the image set 228.

The generated image set 228 may be sent from the image scanner 210 to the image analyzer 212 periodically or in response to changes to the image set, for example. The image set 228 may include the set of container images 155 obtained for each worker node 120 in accordance with the scanning rules 216. The image set 228 can also include statistical and other information (e.g., metadata) that identifying certain features of the container images 155 that may be useful for analyzing the image. For example, each worker node 120 may be associated with a list of the container images loaded on that worker node 120. The image set 228 may also include statistical information for the container 124 associated with each container image 155, such as the amount of time that the container 124 has run within a certain time window, the most recent time that the container 124 has been run, the number of tasks processed by the container 24 within a specified time window, etc.

The image analyzer 212 receives the image set 228 and analyzes the image set 228 to determine which container images should be included in the snapshot 208. The analysis involves combining the container images 155 from each of the individual worker nodes 120 based on criteria determined by a set of analysis rules 218. which may be defined by the system administrator and/or the client. The analysis rules 218 describe criteria that are used to filter the image set 228 to focus on those container images that are more likely to used by new worker nodes. The analysis rules 218 may describe criteria related to the statistical information associated with each container image 155. For example, one rule could specify that only containers 124 running at the time that the scan was performed are to be included in the snapshot 208. Another example rule could specify that only containers 124 that have run for a threshold percentage of time within a specified time frame (e.g., 75 percent run time within last hour) be included in the snapshot. Another rule may specify that the snapshot 208 include container images 155 that are running on more than one worker node 120 or a majority of the worker nodes 120.

The analysis rules 218 may also describe criteria related to a comparison of the containers running on different worker nodes 120. For example, one analysis rule 218 may specify that the union of the container images 155 associated with the worker nodes 120 be included in the snapshot 208. Another analysis rule 218 may specify that the intersection of the container images 155 associated with the worker nodes 120 be included in the snapshot 208. In other words, only those containers 155 operating on all of the worker nodes 120 are included in the snapshot 208. Some analysis rules 218 may use a combination of the statistical data for the containers 155 and the worker nodes 120. For example, one analysis rule 218 may specify that the snapshot 208 include the intersection of the container images 155 that were running at the time of the scan or have run for a threshold percentage of time within a specified time frame.

In some examples, the analysis rules 218 specify that a weighted average may be computed for each of the container images 155 based on the statistical data for each of the container images 155 across the worker nodes 120. For example, the weighted average may be an average of the amount of time that a particular container 124 runs within each of the worker nodes 120. Those container images 155 with a weighted average that exceeds a specified threshold may be added to the snapshot 208, or a specified number of the highest scoring container images 155 may be added to the snapshot 208. The analysis rules 218 may include any suitable combination rules, including the rules described in herein and others.

The image analyzer 212 generates an image manifest 224 based on the analysis and sends the image manifest 224 to the image compiler 214. The image compiler 214 then generates the image manifest 224 from the image manifest 224 and sends the image manifest 224 to the snapshot builder 204 in accordance with the snapshot trigger rules 220. The snapshot trigger rules 220 may be defined by the system administrator and/or the client and describe criteria that can be used to determine when to generate a new snapshot 208 and where to store the new snapshot 208, for example. In some embodiments, the snapshot trigger rules 220 specify that a new snapshot 208 should be created periodically after the passage of a specified amount of time (e.g., every hour, day, week, etc.).

In some embodiments, the snapshot trigger rules 220 determine that a new snapshot 208 will be generated based on the difference between the current image manifest 224 (the image manifest just received) and the previous image manifest used to generate the previously snapshot. For example, the image compiler 214 may maintain a record of the previous image manifest 224 used in the most recent snapshot. Each time a new image manifest 224 is received from the image analyzer 212, the new image manifest 224 can be compared to the recorded image manifest 224 to determine differences, which may be used to generate a drift metric that characterizes the differences. For example, the drift metric may describe the number of container images 155 that are in the current image manifest 224 not in the prior image manifest (current minus prior) and/or a number of container images 155 that are in the prior image manifest but not in the current image manifest 224 (prior minus current). The snapshot trigger rules 220 may also specify a threshold difference that will cause the triggering of a new snapshot 208.

In order to optimize the frequency at which snapshots 208 are created, the image manifest 224 may be compared to the prior image manifest used in the most recent snapshot build. The prior image manifest may be stored to a set of historical manifests 222 that describe the images manifests used in previously triggered snapshots. In some embodiments, the image manifest 224 is compared to the prior image manifest used to create the current used snapshot 208 and a new snapshot is created if the image manifest 224 differs from the historical manifest by a specified degree of difference. The difference may be a difference in the number of container images 155 common to the image manifest 224 and the prior image manifest. If the difference exceeds the specified degree of difference, the image compiler 214 triggers the creation of a new snapshot 208. This reduces the number of unnecessary snapshots 208 created as they will only be created when there is a difference in the image analysis results.

In some embodiments, the image manifest 224 may be sent to the snapshot builder 204 without modifications. In other embodiments, the image compiler 214 may modify the image manifest 224 before sending it to the snapshot builder 204. The modification of the image manifest 224 may be based on the historical manifests 222 that describe the images manifests used in previously triggered snapshots. Any suitable number of historical manifests 222 may be stored and used for the comparison. The historical manifests 222 may include all of the previously implemented image manifests (i.e., used to create a snapshot), the most recently implemented image manifest, or a specified number of the most recently implemented image manifests. Comparing the current image manifest 224 to the historical manifests 222 involves identifying one or more historical manifests 222 that are within a threshold degree of similarity to the image manifest 224. For example, the threshold degree of similarity may be a percentage of container images common to the image manifest 224 and the historical manifests 222. If the degree of similarity between the image manifest 224 and one or more of the historical manifests 222 exceeds the threshold, the image compiler 214 may select the closest historical manifest 222 as the image manifest 224 to be sent to the snapshot builder 204. In this way, the use of historical manifests 222 may improve the consistency between different snapshots 208. If there is no historical manifest 222 that is within the specified similarity threshold, then the image manifest 224 may be used as the new image manifest 224 sent to the snapshot builder 204 without changes. The threshold degree of similarity may be specified by the system administrator and/or the client and included in the snapshot trigger rules.

Once the image compiler 214 triggers the generation of a new snapshot 208, the image manifest 224 is sent to the snapshot builder 204. The snapshot builder 204 may be running on the container cluster 202 or the container orchestration system 112. The snapshot builder 204 combines the image manifest 224 with a base image 226 to generate the snapshot. The base image includes images associated with the worker node 120 VM and includes the platform-specific base files used to ensure that the worker node 120 VM and/or container 124 operate properly within the computing cluster, such as the operating system files and environment configuration files. The snapshot builder 204 may build the snapshot 208 by pulling the container images associated with the image manifest 224 and/or the base image 226 from the remote image repository 150 (Fig. 1). Once built, the snapshot builder 204 sends the newly created snapshot 208 to a local memory of the container cluster 202, such that the scheduler 206 has access to the snapshot 208 locally, i.e., without accessing the remote image repository 150.

The above process may be repeated to maintain the snapshot 208 in a state that will be suitable for newly provisioned workers nodes, such as worker node 120C. When the container cluster 202 scales to add the new worker node 120C, the scheduler 206 loads the container images 155C into the new worker node 120C. Additional container images 155 may also be pulled from the remote image repository 150 (Fig. 1) if they are provisioned to the new worker node 120C but not included in the snapshot 208. Once loaded into the new worker node 120C, the container images 155C are used to build the corresponding containers. Once the new containers are running on the worker node 120C, the image scanner 210 can initiate the scanning of the new worker node 120C and add the new worker node's data to the image set 228 in accordance with the scanning rules 216.

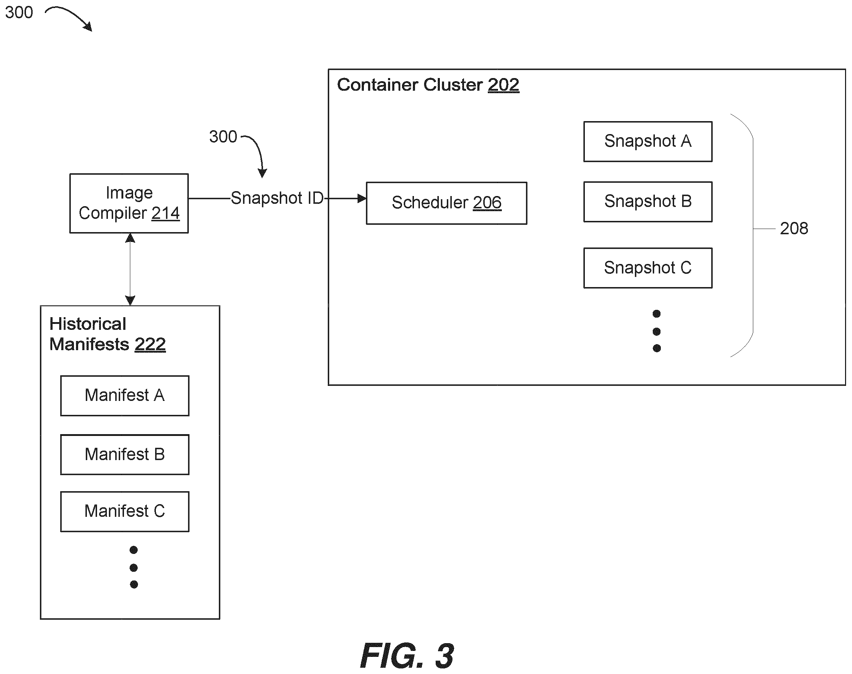

Fig. 3 is a block diagram that illustrates example system 300 for using snapshots, in accordance with some embodiments of the present disclosure. The system 300 can include all of the system components described in relation to Fig. 2. However, for the sake of clarity, only some of the components are depicted in Fig. 3. Specifically, Fig. 3 depicts the container cluster 202, the scheduler 206, and the image compiler 214. Additionally, the container cluster 202 includes several snapshots 208, labeled snapshot A, snapshot B, and snapshot C. Although three snapshots 208 are shown, it will be appreciated that any suitable number of snapshots may be stored, including two, four or more. As described above, each of the snapshots 208 is stored to a local memory that can be accessed by the scheduler without using a network.

Each snapshot 208 may be generated in accordance with processes described in relation to Fig. 2. Accordingly, although not depicted, the system 300 may also include the snapshot builder 204, image scanner 210, image analyzer 212 from Fig. 2. As described above, the image compiler 214 may be connected to a collection of historical manifests 222, each of which has served as the image manifest for generating one of the snapshots 208. In this example, the historical manifests 222 include manifest A, which corresponds with snapshot A, manifest B, which corresponds with snapshot B, and manifest C, which corresponds with snapshot C.

In this embodiment, the container cluster 202 stores at least some of the snapshots 208 received from the snapshot builder 204. For example, the container cluster 202 may store a specified number of the most recent snapshots 208 or the most commonly used snapshots 208. If the image compiler 214 determines that the current image manifest is a close enough match to one of the historical manifests 222 (e.g., manifest B), then the image compiler 214 may instruct the scheduler 206 to use the corresponding snapshot (e.g., snapshot B) for newly provisioned worker nodes. For example, the image compiler 214 may send a snapshot ID 302 to the scheduler indicating the current snapshot 208 to be used for new worker nodes. The image compiler 214 may update the snapshot ID 302 as new image manifests are received. If the received image manifest is not a close match to one of the historical manifests 222, then the image compiler 214 may trigger the building of a new snapshot 208 as described in relation to Fig. 2. The new snapshot may then be added to the collection of existing snapshots 208 and the corresponding historical manifest may be added to the collection of historical manifests 222.

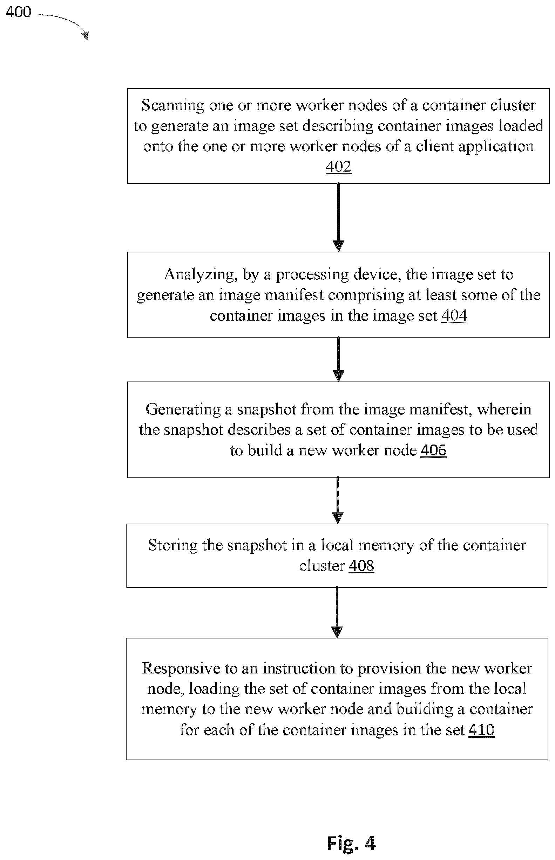

Fig. 4 is a process flow diagram for a method of generating container image snapshots, in accordance with some embodiments of the present disclosure. The method 400 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 400 may be performed by the computing cluster 110 described in relation to Figs. 1-3. The method may begin at block 402.

At block 402, one or more worker nodes of a container cluster are scanned to generate an image set describing container images loaded onto the one or more worker nodes of a client application. The scan may be performed continuously in accordance with a set of scan rules that describe criteria that can be used to filter the container images to focus on those container images that are used more frequently.

At block 404, the image set is analyzed to generate an image manifest comprising at least some of the container images in the image set. The analysis is performed in accordance with a set of analysis rules, such as the analysis rules described above.

At block 406, a snapshot is generated from the image manifest, wherein the snapshot describes a set of container images to be used to build a new worker node. The snapshot generation may be generated in accordance with a set of snapshot trigger rules. For example, the snapshot is generated responsive to a determination that the degree of similarity between the current image manifest and the prior image manifest is below a threshold degree of similarity.

At block 408, the snapshot is stored in a local memory of the container cluster.

At block 410, responsive to a new worker node being provisioned, the set of container images in the snapshot are loaded from the local memory to the new worker node and containers are built for each of the container images in the set. Additional container images may also be pulled from the remote image repository.

In some embodiments, the image manifest from block 404 may be stored as a historical manifest. This historical image manifest and the resulting snapshot may be tagged with a snapshot identifier. When additional image manifests are generated, a degree of similarity between the additional image manifest and the historical manifest can be determined. Responsive to a determination that the degree of similarity is below a threshold, the snapshot ID can be sent to the container cluster so that the corresponding snapshot can be used to build new worker nodes.

It will be appreciated that embodiments of the method 400 may include additional blocks not shown in Fig. 4 and that some of the blocks shown in Fig. 4 may be omitted. Additionally, the processes associated with blocks 402 through 410 may be performed in a different order than what is shown in Fig. 4.

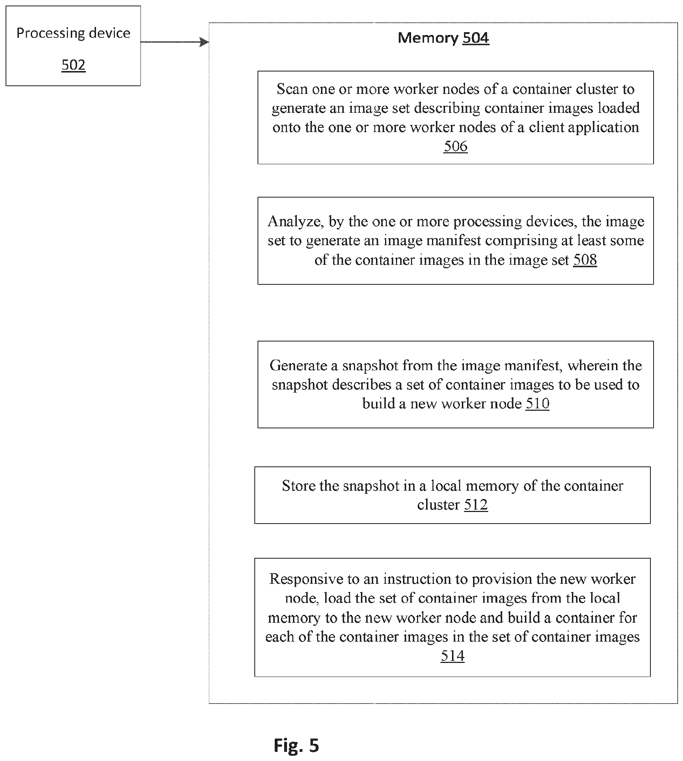

Fig. 5 is a block diagram of a system for generating container image snapshots, in accordance with some embodiments of the present disclosure. The system 500 includes a processing device 502 operatively coupled to a memory 504. The memory 504 includes instructions that are executable by the processing device 502 to cause the processing device 502 to generate container image snapshots.

The memory 504 includes instructions 506 to scan one or more worker nodes of a container cluster to generate an image set describing container images loaded onto the one or more worker nodes of a client application. The memory 504 also includes instructions 508 to analyze the image set to generate an image manifest comprising at least some of the container images in the image set. The memory 504 also includes instructions 510 to generate a snapshot from the image manifest, wherein the snapshot describes a set of container images to be used to build a new worker node. The memory 504 also includes instructions to 512 to store the snapshot in a local memory of the container cluster. The memory 504 also includes instructions 514 to, responsive to an instruction to provision the new worker node, load the set of container images from the local memory to the new worker node and build a container for each of the container images in the set of container images.

It will be appreciated that various alterations may be made to the process illustrated in Fig. 5 and that some components and processes may be omitted or added without departing from the scope of the disclosure.

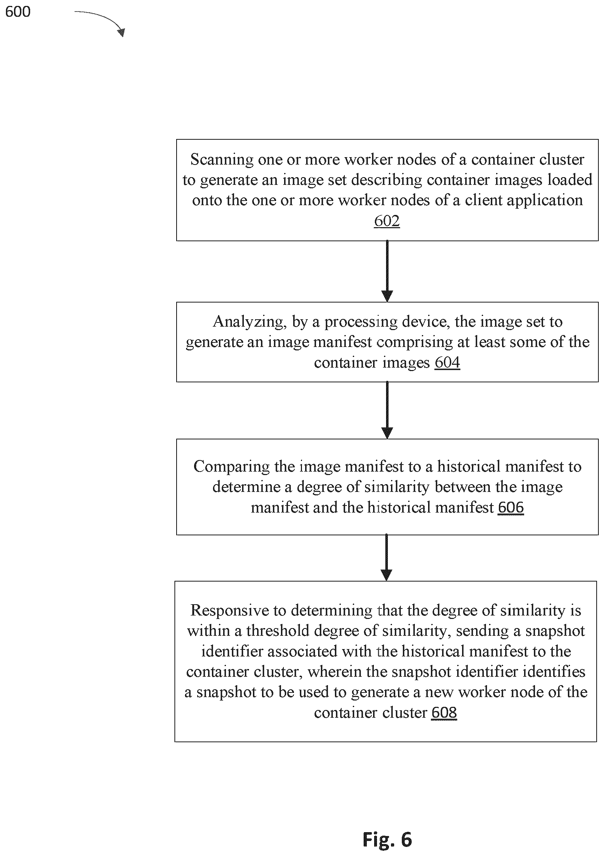

Fig. 6 is a process flow diagram summarizing a method of identifying a container image snapshot to be used to generate new worker nodes, in accordance with some embodiments of the present disclosure. The method 600 may be performed by processing logic that may include hardware, software, firmware, or a combination thereof. In some embodiments, the method 600 may be performed by the computing cluster 110 described in relation to Figs. 1-3.

At block 602, one or more worker nodes of a container cluster are scanned to generate an image set describing container images loaded onto the one or more worker nodes of a client application. The scan may be performed continuously in accordance with a set of scan rules that describe criteria that can be used to filter the container images to focus on those container images that are used more frequently.

At block 604, the image set is analyzed to generate an image manifest comprising at least some of the container images in the image set. The analysis is performed in accordance with a set of analysis rules, such as the analysis rules described above.

At block 606, the image manifest is compared to a historical manifest to determine a degree of similarity between the image manifest and the historical manifest. The historical manifest may be one of a plurality of historical manifests corresponding with previously generated snapshots that have been stored to the local memory of the worker nodes of the container cluster.

At block 608, responsive to determining that the degree of similarity is within a threshold degree of similarity, the snapshot identifier associated with the historical manifest is sent to the container cluster, wherein the snapshot identifier identifies a snapshot to be used to generate a new worker node of the container cluster.

It will be appreciated that embodiments of the method 600 may include additional blocks not shown in Fig. 6 and that some of the blocks shown in Fig. 6 may be omitted. Additionally, the processes associated with blocks 602 through 608 may be performed in a different order than what is shown in Fig. 6.

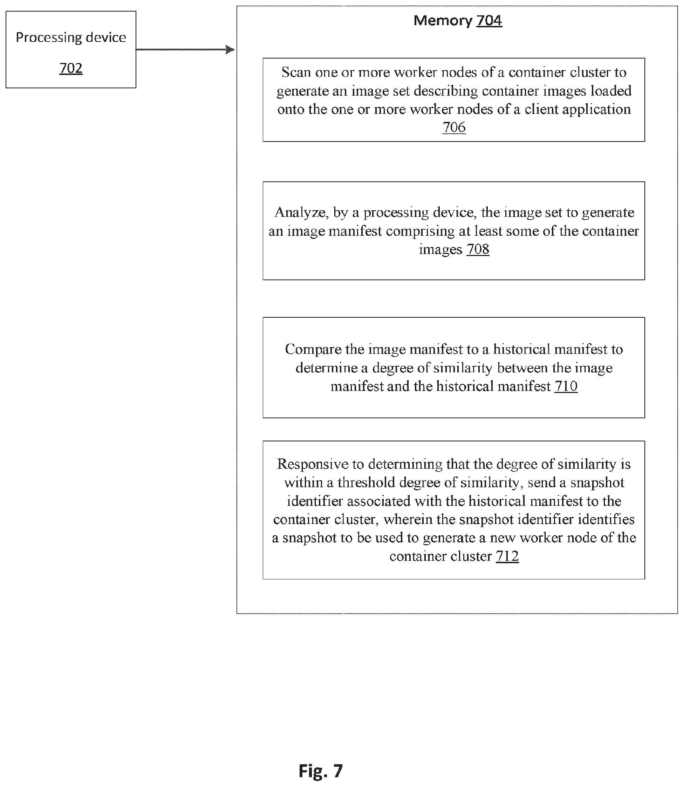

Fig. 7 is a block diagram of a system for identifying a container image snapshot to be used to generate new worker nodes, in accordance with some embodiments of the present disclosure. The system 700 includes a processing device 702 operatively coupled to a memory 704. The memory 704 includes instructions that are executable by the processing device 702 to cause the processing device 702 to scan one or more worker nodes to identify a container image snapshot to be used to generate new worker nodes.

The memory 704 includes instructions 706 to scan one or more worker nodes of a container cluster to generate an image set describing container images loaded onto the one or more worker nodes of a client application. The memory 704 also includes instructions 708 to analyze, by a processing device, the image set to generate an image manifest comprising at least some of the container images. The memory 704 also includes instructions 710 to compare the image manifest to a historical manifest to determine a degree of similarity between the image manifest and the historical manifest. The memory 704 also includes instructions 712 to, responsive to determining that the degree of similarity is within a threshold degree of similarity, send a snapshot identifier associated with the historical manifest to the container cluster, wherein the snapshot identifier identifies a snapshot to be used to generate a new worker node of the container cluster.

It will be appreciated that various alterations may be made to the process illustrated in Fig. 7 and that some components and processes may be omitted or added without departing from the scope of the disclosure.

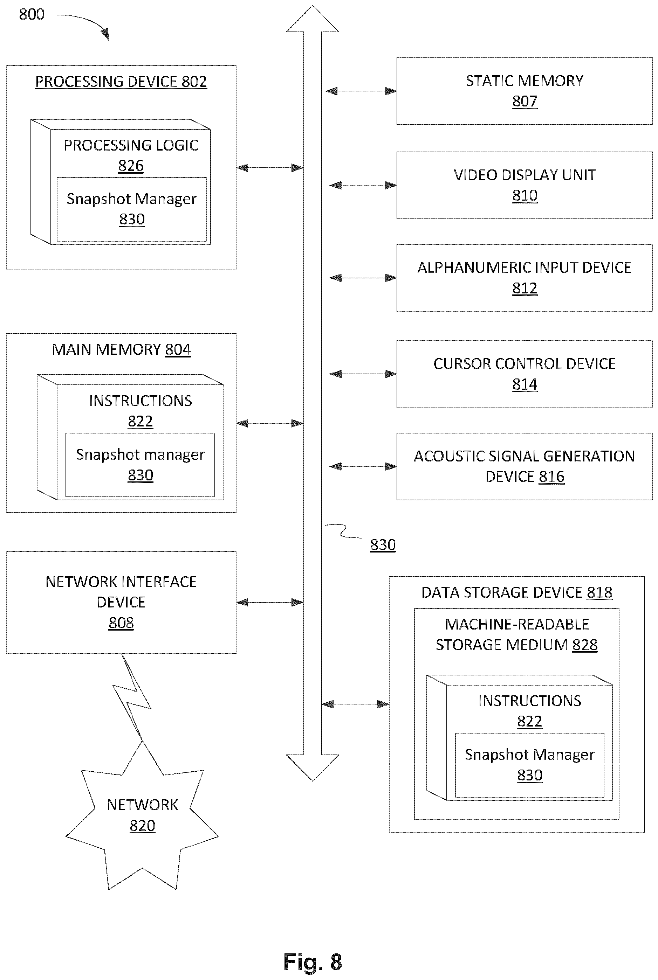

Fig. 8 is a block diagram of an example computing device 800 that may perform one or more of the operations described herein, in accordance with some embodiments of the present disclosure. Computing device 800 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 800 may include a processing device (*e.g.,* a general purpose processor, a PLD, etc.) 802, a main memory 804 (*e.g*., synchronous dynamic random access memory (DRAM), read-only memory (ROM)), a static memory 806 (*e.g.,* flash memory and a data storage device 818), which may communicate with each other via a bus 830.

Processing device 802 may be provided by one or more general-purpose processing devices such as a microprocessor, central processing unit, or the like. In an illustrative example, processing device 802 may comprise a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 802 may also comprise one or more special-purpose processing devices such as an application specific integrated circuit (ASIC), a field programmable gate array (FPGA), a digital signal processor (DSP), network processor, or the like. The processing device 802 may be configured to execute the operations described herein, in accordance with one or more aspects of the present disclosure, for performing the operations and steps discussed herein.

Computing device 800 may further include a network interface device 808 which may communicate with a network 820. The computing device 800 also may include a video display unit 810 (*e.g.,* a liquid crystal display (LCD) or a cathode ray tube (CRT)), an alphanumeric input device 812 (*e.g.,* a keyboard), a cursor control device 814 (*e.g.,* a mouse) and an acoustic signal generation device 816 (*e.g.,* a speaker). In one embodiment, video display unit 810, alphanumeric input device 812, and cursor control device 814 may be combined into a single component or device (*e.g.,* an LCD touch screen).

Data storage device 818 may include a computer-readable storage medium 828 on which may be stored one or more sets of instructions 822 that may include a snapshot manager 830 comprising instructions for carrying out the operations described herein, in accordance with one or more aspects of the present disclosure. The snapshot manager 830 may also reside, completely or at least partially, within main memory 804 and/or within processing device 802 (e.g. within processing logic 826) during execution thereof by computing device 800, main memory 804 and processing device 802 also constituting computer-readable media. The snapshot manager 830 may further be transmitted or received over a network 820 via network interface device 808.

While computer-readable storage medium 828 is shown in an illustrative example to be a single medium, the term "computer-readable storage medium" should be taken to include a single medium or multiple media (*e.g.,* a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solid-state memories, optical media and magnetic media.

Unless specifically stated otherwise, terms such as "receiving," "routing," "updating," "providing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

## Claims

1. A computer-implemented method comprising:
scanning (402) one or more worker nodes (120) of a container cluster (202) to generate an image set (228) describing container images (155) loaded onto the one or more worker nodes of a client application, wherein scanning (402) the one or more worker nodes (120) comprises adding to the image set the container images that are associated with currently running containers or adding to the image set the container images that are associated with containers that have run within a threshold time frame;
analyzing (404) using a set of analysis rules (218), by a processing device, the image set to generate an image manifest (224) comprising at least some of the container images in the image set, wherein the set of analysis rules (218) comprise a criteria used to filter the image set to comprise container images determined to be likely to be used by a new worker node;
generating (406) a snapshot (208) from the image manifest, wherein the snapshot describes a set of container images to be used to build the new worker node;
storing (408) the snapshot in a local memory of the container cluster; and
responsive to an instruction to provision the new worker node, loading (410) the set of container images from the local memory to the new worker node and building a container for each of the container images in the set;
**characterized in that** generating the snapshot comprises:
determining a degree of similarity between the image manifest and a previously implemented manifest; and
triggering the generation of the snapshot responsive to a determination that the degree of similarity is below a threshold.

2. The method of claim 1, wherein analyzing the image set to generate the image manifest comprises identifying a set of container images that represent a union of the one or more worker nodes or analyzing the image set to generate the image manifest comprises identifying a set of container images that represent an intersection of the one or more worker nodes.

3. The method of claim 1, further comprising storing the image manifest as a historical manifest (222) and associating the historical manifest and the snapshot with a snapshot identifier.

4. The method of claim 3, further comprising generating an additional image manifest, determining a degree of similarity between the additional image manifest and the historical manifest and, responsive to a determination that the degree of similarity is below a threshold, sending the snapshot identifier to the container cluster.

5. A computing system comprising:
a memory (504); and
a processing device (502) operatively coupled to the memory, the processing device configured to:
scan (506) one or more worker nodes of a container cluster to generate an image set describing container images loaded onto the one or more worker nodes of a client application, wherein to scan (506) the one or more worker nodes the processing device (502) is to add to the image set the container images that are associated with currently running containers or to add to the image set the container images that are associated with containers that have run within a threshold time frame;
analyze (508) the image set, using a set of analysis rules (218), to generate an image manifest comprising at least some of the container images in the image set, wherein the set of analysis rules (218) comprise a criteria used to filter the image set to comprise container images determined to be likely to be used by a new worker node;
generate (510) a snapshot from the image manifest, wherein the snapshot describes a set of container images to be used to build a new worker node;
store (512) the snapshot in a local memory of the container cluster; and responsive to an instruction to provision the new worker node, load (514) the set of container images from the local memory to the new worker node and build a container for each of the container images in the set of container images;
**characterized in that** generating the snapshot comprises:
determining a degree of similarity between the image manifest and a previously implemented manifest; and
triggering the generation of the snapshot responsive to a determination that the degree of similarity is below a threshold.

6. The computing system of claim 5, wherein to analyze the image set to generate the image manifest the processing device is to identify a set of container images that represent a union of the worker nodes or to analyze the image set to generate the image manifest the processing device is to identify a set of container images that represent an intersection of the worker nodes.

7. The computing system of claim 5, wherein to generate the snapshot the processing device is further to combine the image manifest and a base image.

8. A non-transitory computer-readable storage medium (828) including instructions (822) that, when executed by a processing device (802), cause the processing device to:
scan one or more worker nodes of a container cluster to generate an image set describing container images loaded onto the one or more worker nodes of a client application, wherein to scan the one or more worker nodes comprises to add to the image set the container images that are associated with currently running containers or to add to the image set the container images that are associated with containers that have run within a threshold time frame;
analyze, by the processing device, using a set of analysis rules (218), the image set to generate an image manifest comprising at least some of the container images in the image set, wherein the set of analysis rules (218) comprise a criteria used to filter the image set to comprise container images determined to be likely to be used by a new worker node;
generate a snapshot from the image manifest, wherein the snapshot describes a set of container images to be used to build a new worker node;
store the snapshot in a local memory of the container cluster; and
responsive to an instruction to provision the new worker node, load the set of container images from the local memory to the new worker node and build a container for each of the container images in the set of container images;
**characterized in that** generating the snapshot comprises:
determining a degree of similarity between the image manifest and a previously implemented manifest; and
triggering the generation of the snapshot responsive to a determination that the degree of similarity is below a threshold.

9. The non-transitory computer-readable storage medium of claim 8, wherein to analyze the image set to generate the image manifest comprises to identify a set of container images that represent a union of the worker nodes or to analyze the image set to generate the image manifest comprises to identify a set of container images that represent an intersection of the worker nodes.

## Patentansprüche

1. Ein computerimplementiertes Verfahren, das Folgendes beinhaltet:
Scannen (402) eines oder mehrerer Arbeiterknoten (120) eines Container-Clusters (202), um einen Image-Satz (228) zu erzeugen, der Container-Images (155) beschreibt, die auf den einen oder die mehreren Arbeiterknoten einer Client-Anwendung geladen sind, wobei das Scannen (402) des einen oder der mehreren Arbeiterknoten (120) das Hinzufügen der Container-Images, die mit aktuell laufenden Containern assoziiert sind, zu dem Image-Satz oder das Hinzufügen der Container-Images, die mit Containern assoziiert sind, die innerhalb eines Schwellenzeitrahmens gelaufen sind, zu dem Image-Satz beinhaltet;
Analysieren (404) des Image-Satzes unter Verwendung eines Satzes Analyseregeln (218) durch eine Verarbeitungsvorrichtung, um ein Image-Manifest (224) zu erzeugen, das mindestens einige der Container-Images in dem Image-Satz beinhaltet, wobei der Satz Analyseregeln (218) ein Kriterium beinhaltet, das zum Filtern des Image-Satzes verwendet wird, sodass er Container-Images beinhaltet, von denen bestimmt wird, dass sie wahrscheinlich von einem neuen Arbeiterknoten verwendet werden;
Erzeugen (406) eines Schnappschusses (208) aus dem Image-Manifest, wobei der Schnappschuss einen Satz Container-Images beschreibt, die zum Erstellen des neuen Arbeiterknotens verwendet werden sollen;
Speichern (408) des Schnappschusses in einem lokalen Speicher des Container-Clusters; und
als Reaktion auf eine Anweisung zum Provisionieren des neuen Arbeiterknotens, Laden (410) des Satzes Container-Images aus dem lokalen Speicher in den neuen Arbeiterknoten und Erstellen eines Containers für jedes der Container-Images in dem Satz;
**dadurch gekennzeichnet, dass** das Erzeugen des Schnappschusses Folgendes beinhaltet:
Bestimmen eines Ähnlichkeitsgrades zwischen dem Image-Manifest und einem zuvor implementierten Manifest; und
Auslösen der Erzeugung des Schnappschusses als Reaktion auf eine Bestimmung, dass der Ähnlichkeitsgrad unter einem Schwellenwert liegt.

2. Verfahren gemäß Anspruch 1, wobei das Analysieren des Image-Satzes zum Erzeugen des Image-Manifests das Identifizieren eines Satzes Container-Images beinhaltet, die eine Vereinigung des einen oder der mehreren Arbeiterknoten repräsentieren, oder das Analysieren des Image-Satzes zum Erzeugen des Image-Manifests das Identifizieren eines Satzes Container-Images beinhaltet, die eine Überschneidung des einen oder der mehreren Arbeiterknoten repräsentieren.

3. Verfahren gemäß Anspruch 1, das ferner das Speichern des Image-Manifests als ein altes Manifest (222) und das Assoziieren des alten Manifests und des Schnappschusses mit einer Schnappschusskennung beinhaltet.

4. Verfahren gemäß Anspruch 3, das ferner das Erzeugen eines zusätzlichen Image-Manifests, das Bestimmen eines Ähnlichkeitsgrades zwischen dem zusätzlichen Image-Manifest und dem alten Manifest und, als Reaktion auf eine Bestimmung, dass der Ähnlichkeitsgrad unter einem Schwellenwert liegt, das Senden der Schnappschusskennung an den Container-Cluster beinhaltet.

5. Ein Rechensystem, das Folgendes beinhaltet:
einen Speicher (504); und
eine Verarbeitungsvorrichtung (502), die betriebsfähig mit dem Speicher gekoppelt ist, wobei die Verarbeitungsvorrichtung für Folgendes konfiguriert ist:
Scannen (506) eines oder mehrerer Arbeiterknoten eines Container-Clusters, um einen Image-Satz zu erzeugen, der Container-Images beschreibt, die auf den einen oder die mehreren Arbeiterknoten einer Client-Anwendung geladen sind,
wobei die Verarbeitungsvorrichtung (502) zum Scannen (506) des einen oder der mehreren Arbeiterknoten die Container-Images, die mit aktuell laufenden Containern assoziiert sind, zu dem Image-Satz hinzufügen soll oder die Container-Images, die mit Containern assoziiert sind, die innerhalb eines Schwellenzeitrahmens gelaufen sind, zu dem Image-Satz hinzufügen soll;
Analysieren (508) des Image-Satzes unter Verwendung eines Satzes Analyseregeln (218), um ein Image-Manifest zu erzeugen, das mindestens einige der Container-Images in dem Image-Satz beinhaltet, wobei der Satz Analyseregeln (218) ein Kriterium beinhaltet, das zum Filtern des Image-Satzes verwendet wird, sodass er Container-Images beinhaltet, von denen bestimmt wird, dass sie wahrscheinlich von einem neuen Arbeiterknoten verwendet werden;
Erzeugen (510) eines Schnappschusses aus dem Image-Manifest, wobei der Schnappschuss einen Satz Container-Images beschreibt, die zum Erstellen eines neuen Arbeiterknotens verwendet werden sollen;
Speichern (512) des Schnappschusses in einem lokalen Speicher des Container-Clusters; und
als Reaktion auf eine Anweisung zum Provisionieren des neuen Arbeiterknotens, Laden (514) des Satzes Container-Images aus dem lokalen Speicher in den neuen Arbeiterknoten und Erstellen eines Containers für jedes der Container-Images in dem Satz Container-Images;
**dadurch gekennzeichnet, dass** das Erzeugen des Schnappschusses Folgendes beinhaltet:
Bestimmen eines Ähnlichkeitsgrades zwischen dem Image-Manifest und einem zuvor implementierten Manifest; und
Auslösen der Erzeugung des Schnappschusses als Reaktion auf eine Bestimmung, dass der Ähnlichkeitsgrad unter einem Schwellenwert liegt.

6. Rechensystem gemäß Anspruch 5, wobei die Verarbeitungsvorrichtung zum Analysieren des Image-Satzes zum Erzeugen des Image-Manifests einen Satz Container-Images identifizieren soll, die eine Vereinigung der Arbeiterknoten repräsentieren, oder die Verarbeitungsvorrichtung zum Analysieren des Image-Satzes zum Erzeugen des Image-Manifests einen Satz Container-Images identifizieren soll, die eine Überschneidung der Arbeiterknoten repräsentieren.

7. Rechensystem gemäß Anspruch 5, wobei die Verarbeitungsvorrichtung zum Erzeugen des Schnappschusses ferner das Image-Manifest und ein Basis-Image kombinieren soll.

8. Ein nichtflüchtiges computerlesbares Speichermedium (828), das Anweisungen (822) umfasst, die bei Ausführung durch eine Verarbeitungsvorrichtung (802) die Verarbeitungsvorrichtung zu Folgendem veranlassen:
Scannen eines oder mehrerer Arbeiterknoten eines Container-Clusters, um einen Image-Satz zu erzeugen, der Container-Images beschreibt, die auf den einen oder die mehreren Arbeiterknoten einer Client-Anwendung geladen sind, wobei das Scannen des einen oder der mehreren Arbeiterknoten das Hinzufügen der Container-Images, die mit aktuell laufenden Containern assoziiert sind, zu dem Image-Satz oder das Hinzufügen der Container-Images, die mit Containern assoziiert sind, die innerhalb eines Schwellenzeitrahmens gelaufen sind, zu dem Image-Satz beinhaltet;
Analysieren des Image-Satzes durch die Verarbeitungsvorrichtung unter Verwendung eines Satzes Analyseregeln (218), um ein Image-Manifest zu erzeugen, das mindestens einige der Container-Images in dem Image-Satz beinhaltet, wobei der Satz Analyseregeln (218) ein Kriterium beinhaltet, das zum Filtern des Image-Satzes verwendet wird, sodass er Container-Images beinhaltet, von denen bestimmt wird, dass sie wahrscheinlich von einem neuen Arbeiterknoten verwendet werden;
Erzeugen eines Schnappschusses aus dem Image-Manifest, wobei der Schnappschuss einen Satz Container-Images beschreibt, die zum Erstellen eines neuen Arbeiterknotens verwendet werden sollen;
Speichern des Schnappschusses in einem lokalen Speicher des Container-Clusters; und
als Reaktion auf eine Anweisung zum Provisionieren des neuen Arbeiterknotens, Laden des Satzes Container-Images aus dem lokalen Speicher in den neuen Arbeiterknoten und Erstellen eines Containers für jedes der Container-Images in dem Satz Container-Images;
**dadurch gekennzeichnet, dass** das Erzeugen des Schnappschusses Folgendes beinhaltet:
Bestimmen eines Ähnlichkeitsgrades zwischen dem Image-Manifest und einem zuvor implementierten Manifest; und
Auslösen der Erzeugung des Schnappschusses als Reaktion auf eine Bestimmung, dass der Ähnlichkeitsgrad unter einem Schwellenwert liegt.

9. Nichtflüchtiges computerlesbares Speichermedium gemäß Anspruch 8, wobei das Analysieren des Image-Satzes zum Erzeugen des Image-Manifests das Identifizieren eines Satzes Container-Images beinhaltet, die eine Vereinigung der Arbeiterknoten repräsentieren, oder das Analysieren des Image-Satzes zum Erzeugen des Image-Manifests das Identifizieren eines Satzes Container-Images beinhaltet, die eine Überschneidung der Arbeiterknoten repräsentieren.

## Revendications

1. Un procédé mis en œuvre par ordinateur comprenant le fait :
de balayer (402) un ou plusieurs nœuds de travail (120) d'un cluster de conteneurs (202) pour générer un ensemble d'images (228) décrivant des images de conteneurs (155) chargées sur les un ou plusieurs nœuds de travail d'une application client, le fait de balayer (402) les un ou plusieurs nœuds de travail (120) comprenant le fait d'ajouter à l'ensemble d'images les images de conteneurs qui sont associées à des conteneurs actuellement en cours d'exécution ou le fait d'ajouter à l'ensemble d'images les images de conteneurs qui sont associées à des conteneurs qui ont été exécutés dans les limites d'un délai seuil ;
d'analyser (404) à l'aide d'un ensemble de règles d'analyse (218), par un dispositif de traitement, l'ensemble d'images pour générer un manifeste d'images (224) comprenant au moins certaines des images de conteneurs dans l'ensemble d'images, l'ensemble de règles d'analyse (218) comprenant un critère utilisé pour filtrer l'ensemble d'images afin qu'il comprenne des images de conteneurs déterminées comme étant susceptibles d'être utilisées par un nouveau nœud de travail ;
de générer (406) un instantané (208) à partir du manifeste d'images, l'instantané décrivant un ensemble d'images de conteneurs à utiliser pour construire le nouveau nœud de travail ;
de stocker (408) l'instantané dans une mémoire locale du cluster de conteneurs ; et
en réponse à une instruction de provisionner le nouveau nœud de travail, de charger (410) l'ensemble d'images de conteneurs à partir de la mémoire locale jusque sur le nouveau nœud de travail et de construire un conteneur pour chacune des images de conteneurs dans l'ensemble ;
**caractérisé en ce que** le fait de générer l'instantané comprend le fait :
de déterminer un degré de similarité entre le manifeste d'images et un manifeste précédemment mis en œuvre ; et
de déclencher la génération de l'instantané en réponse à une détermination que le degré de similarité est inférieur à un seuil.

2. Le procédé de la revendication 1, dans lequel le fait d'analyser l'ensemble d'images pour générer le manifeste d'images comprend le fait d'identifier un ensemble d'images de conteneurs qui représentent un regroupement des un ou plusieurs nœuds de travail ou le fait d'analyser l'ensemble d'images pour générer le manifeste d'images comprend le fait d'identifier un ensemble d'images de conteneurs qui représentent une intersection des un ou plusieurs nœuds de travail.

3. Le procédé de la revendication 1, comprenant en outre le fait de stocker le manifeste d'images sous forme de manifeste historique (222) et d'associer le manifeste historique et l'instantané à un identifiant d'instantané.

4. Le procédé de la revendication 3, comprenant en outre le fait de générer un manifeste d'images supplémentaire, de déterminer un degré de similarité entre le manifeste d'images supplémentaire et le manifeste historique et, en réponse à une détermination que le degré de similarité est inférieur à un seuil, d'envoyer l'identifiant d'instantané au cluster de conteneurs.

5. Un système informatique comprenant :
une mémoire (504) ; et
un dispositif de traitement (502) couplé de manière opérationnelle à la mémoire, le dispositif de traitement étant configuré pour :
balayer (506) un ou plusieurs nœuds de travail d'un cluster de conteneurs afin de générer un ensemble d'images décrivant des images de conteneurs chargées sur les un ou plusieurs nœuds de travail d'une application client, dans lequel pour balayer (506) les un ou plusieurs nœuds de travail, le dispositif de traitement (502) doit ajouter à l'ensemble d'images les images de conteneurs qui sont associées à des conteneurs actuellement en cours d'exécution ou ajouter à l'ensemble d'images les images de conteneurs qui sont associées à des conteneurs qui ont été exécutés dans les limites d'un délai seuil ;
analyser (508) l'ensemble d'images, à l'aide d'un ensemble de règles d'analyse (218), afin de générer un manifeste d'images comprenant au moins certaines des images de conteneurs dans l'ensemble d'images, l'ensemble de règles d'analyse (218) comprenant un critère utilisé pour filtrer l'ensemble d'images afin qu'il comprenne des images de conteneurs déterminées comme étant susceptibles d'être utilisées par un nouveau nœud de travail ;
générer (510) un instantané à partir du manifeste d'images, l'instantané décrivant un ensemble d'images de conteneurs à utiliser pour construire un nouveau nœud de travail ;
stocker (512) l'instantané dans une mémoire locale du cluster de conteneurs ; et
en réponse à une instruction de provisionner le nouveau nœud de travail, charger (514) l'ensemble d'images de conteneurs à partir de la mémoire locale jusque sur le nouveau nœud de travail et construire un conteneur pour chacune des images de conteneurs dans l'ensemble d'images de conteneurs ;
**caractérisé en ce que** le fait de générer l'instantané comprend le fait :
de déterminer un degré de similarité entre le manifeste d'images et un manifeste précédemment mis en œuvre ; et
de déclencher la génération de l'instantané en réponse à une détermination que le degré de similarité est inférieur à un seuil.

6. Le système informatique de la revendication 5, dans lequel pour analyser l'ensemble d'images afin de générer le manifeste d'images, le dispositif de traitement doit identifier un ensemble d'images de conteneurs qui représentent un regroupement des nœuds de travail ou pour analyser l'ensemble d'images afin de générer le manifeste d'images, le dispositif de traitement doit identifier un ensemble d'images de conteneurs qui représentent une intersection des nœuds de travail.

7. Le système informatique de la revendication 5, dans lequel, pour générer l'instantané, le dispositif de traitement doit en outre combiner le manifeste d'images et une image de base.

8. Un support de stockage non transitoire lisible par ordinateur (828) incluant des instructions (822) qui, lorsqu'elles sont exécutées par un dispositif de traitement (802), amènent le dispositif de traitement à :
balayer un ou plusieurs nœuds de travail d'un cluster de conteneurs pour générer un ensemble d'images décrivant des images de conteneurs chargées sur les un ou plusieurs nœuds de travail d'une application client, balayer les un ou plusieurs nœuds de travail comprenant ajouter à l'ensemble d'images les images de conteneurs qui sont associées à des conteneurs actuellement en cours d'exécution ou ajouter à l'ensemble d'images les images de conteneurs qui sont associées à des conteneurs qui ont été exécutés dans les limites d'un délai seuil ;
analyser, par le dispositif de traitement, à l'aide d'un ensemble de règles d'analyse (218), l'ensemble d'images pour générer un manifeste d'images comprenant au moins certaines des images de conteneurs dans l'ensemble d'images, l'ensemble de règles d'analyse (218) comprenant un critère utilisé pour filtrer l'ensemble d'images afin qu'il comprenne des images de conteneurs déterminées comme étant susceptibles d'être utilisées par un nouveau nœud de travail ;
générer un instantané à partir du manifeste d'images, l'instantané décrivant un ensemble d'images de conteneurs à utiliser pour construire un nouveau nœud de travail ;
stocker l'instantané dans une mémoire locale du cluster de conteneurs ; et
en réponse à une instruction de provisionner le nouveau nœud de travail, charger l'ensemble d'images de conteneurs à partir de la mémoire locale jusque sur le nouveau nœud de travail et construire un conteneur pour chacune des images de conteneurs dans l'ensemble d'images de conteneurs ;
**caractérisé en ce que** le fait de générer l'instantané comprend le fait :
de déterminer un degré de similarité entre le manifeste d'images et un manifeste précédemment mis en œuvre ; et
de déclencher la génération de l'instantané en réponse à une détermination que le degré de similarité est inférieur à un seuil.

9. Le support de stockage non transitoire lisible par ordinateur de la revendication 8, dans lequel analyser l'ensemble d'images pour générer le manifeste d'images comprend identifier un ensemble d'images de conteneurs qui représentent un regroupement des nœuds de travail ou analyser l'ensemble d'images pour générer le manifeste d'images comprend identifier un ensemble d'images de conteneurs qui représentent une intersection des nœuds de travail.
